# EUROPEAN PATENT APPLICATION

(11) **EP 4 134 772 A1**
(43) Date of publication of application: **15.02.2023**
(21) Application number: 21784242.6
(22) Date of filing: 04.01.2021
(51) Int. Cl.: G05D 1/02

(54) **IMAGE VIEWING METHOD, TERMINAL, AND CLEANER**

(30) Priority: 09.04.2020 CN 202010275131
(71) Applicant: Beijing Roborock Innovation Technology Co., Ltd., Beijing 102299 (CN)
(72) Inventor: WU, Zhen, Beijing 102299 (CN); ZHANG, Ruimin, Beijing 102299 (CN); CONG, Yiming, Beijing 102299 (CN); HU, Zhiying, Beijing 102299 (CN)
(74) Representative: Studio Torta S.p.A.
(86) International application number: PCT/CN2021/070154
(87) International publication number: WO 2021/203780

(57) **Abstract**

The present disclosure provides an image viewing method, a terminal, and a cleaner. The method comprises: first, receiving, by means of a client installed on a terminal and from a user, an operation instruction of viewing an obstacle; then, in response to the operation instruction, sending to a cleaner a viewing request, carrying identification information, for the obstacle so as to instruct the cleaner to select an image of the obstacle identified by the identification information from an obstacle image library; and finally, receiving the image of the obstacle identified by the identification information, fed back by the cleaner, and controlling the display of the image of the obstacle by means of the client.

## Description

### CROSS-REFERENCE TO RELATED APPLICATION

This application claims priority to Chinese Patent Application No. 202010275131.6 filed on April 9, 2020, which is incorporated herein by reference in its entirety.

### TECHNICAL FIELD

The present disclosure relates to the field of image processing technologies, and in particular, to an image viewing method, a terminal, and a cleaning machine.

### BACKGROUND

At present, after being equipped with a camera, a cleaning robot or a cleaning machine can effectively avoid an obstacle in a process of cleaning, and display an avoidance result such as information such as an obstacle position and the like on a map in an application. However, when a user views the map using the application, what the obstacle that the cleaning robot or the cleaning machine avoids cannot be visually seen, thereby causing bad user experience.

It needs to be noted that, information disclosed in foregoing background section is merely for improving understanding of the background of the present disclosure, and therefore, information that does not constitute the prior art known to those ordinary skilled in the art may be included.

### SUMMARY

According to a first aspect of the present invention, there is provided an image viewing method, applied to a terminal on which a client matching with a cleaning machine is installed. The method includes: receiving, by using the client, an operation instruction for viewing an obstacle; sending, in response to the operation instruction for viewing the obstacle, a request to view the obstacle, wherein the viewing request carries identification information, and the identification information is identification information used to uniquely identify an image of the obstacle or identification information used to uniquely identify the obstacle; receiving the image of the obstacle identified by the identification information; and controlling, by the client, a display of the image of the obstacle.

According to an embodiment of the present invention, receiving, by the client, the operation instruction for viewing the obstacle includes: receiving, by the client, a click operation instruction on an icon corresponding to the obstacle; or receiving, by the client, a touch operation instruction on an icon corresponding to the obstacle.

According to an embodiment of the present invention, controlling, by the client, the display of the image of the obstacle includes: displaying, by the client, the image of the obstacle in a display area in which the icon corresponding to the obstacle is located.

According to a second aspect of the present invention, there is further provided an image viewing method, applied to a cleaning machine d. The method includes: receiving a request to view an obstacle, wherein the request carries identification information, and the identification information is identification information used to uniquely identify an image of the obstacle or identification information used to uniquely identify the obstacle; selecting the image of the obstacle identified by the identification information from an obstacle image database; and feeding back the image of the obstacle identified by the identification information.

According to an embodiment of the present invention, the method further includes: while feeding back the image of the obstacle identified by the identification information, feeding back at least one of following information related to the obstacle: type of the obstacle, a confidence of the obstacle, and a quantity of times the cleaning machine avoids the obstacle.

According to an embodiment of the present invention, the method further includes: after selecting the image of the obstacle identified by the identification information from the obstacle image database, cropping the image of the obstacle, and correspondingly, the feeding back the image of the obstacle identified by the identification information includes: feeding back the cropped image.

According to an embodiment of the present invention, the method further includes: receiving a request to view an original image of the cropped image; and feeding back, in response to the request to view the original image, the image of the obstacle identified by the identification information.

According to an embodiment of the present invention, the method further includes: before selecting the image of the obstacle identified by the identification information from the obstacle image database, storing one or more images into the obstacle image database in advance, wherein each image represents a respective obstacle; and allocating, to each of the one or more images, a piece of identification information used to uniquely identify the image.

According to an embodiment of the present invention, the method further includes: before selecting the image of the obstacle identified by the identification information from the obstacle image database, storing one or more images and one or more identifiers into the obstacle image database in advance, wherein each image represents a respective obstacle, and each identifier is associated with a respective image, and is used to uniquely identify the obstacle represented by the image.

According to a third aspect of the present invention, there is further provided a terminal on which a client matching with a cleaning machine is installed. The terminal includes a receiving module, a sending module, and a display control module. The receiving module is configured to receive, by the client, an operation instruction for viewing an obstacle; the sending module is configured to send, in response to the operation instruction for viewing the obstacle, a request to view the obstacle, wherein the request carries identification information, and the identification information is identification information used to uniquely identify an image of the obstacle or identification information used to uniquely identify the obstacle; the receiving module is further configured to receive the image of the obstacle identified by the identification information; and the display control module is configured to control, by the client, a display of the image of the obstacle.

According to an embodiment of the present invention, the receiving module is further configured to, receive, by the client, a click operation instruction on an icon corresponding to the obstacle; or receive, by the client, a touch operation instruction on an icon corresponding to the obstacle.

According to an embodiment of the present invention, the display control module is further configured to display, by the client, the image of the obstacle in a display area in which the icon corresponding to the obstacle is located.

According to a fourth aspect of the present invention, there is still provided a cleaning machine. The cleaning machine includes: a receiving module, configured to receive a request to view an obstacle, wherein the request carries identification information, and the identification information is identification information used to uniquely identify an image of the obstacle or identification information used to uniquely identify the obstacle; a selection module, configured to select the image of the obstacle identified by the identification information from an obstacle image database; and a feedback module, configured to feed back the image of the obstacle identified by the identification information.

According to an embodiment of the present invention, the feedback module is further configured to, while feeding back the image of the obstacle identified by the identification information, feeding back at least one of following information related to the obstacle: type of the obstacle, a confidence of the obstacle, and a quantity of times that the cleaning machine avoids the obstacle.

According to an embodiment of the present invention, the cleaning machine further includes a cropping module, configured to, after selecting the image of the obstacle identified by the identification information from the obstacle image database by the selection module, crop the image of the obstacle; and correspondingly, the feedback module is specifically configured to feed back the cropped image.

According to an embodiment of the present invention, the receiving module is further configured to receive a request to view an original image of the cropped image; and the feedback module is further configured to feed back, in response to the request to view the original image, the image of the obstacle identified by the identification information.

According to another aspect of the present disclosure, there is provided an image viewing apparatus including a processor and a memory, wherein the memory stores computer program instructions, and the computer program instructions perform the image viewing method described in any one of the foregoing embodiments when being executed by the processor.

According to still another aspect of the present disclosure, there is further provided a non-transitory computer-readable storage medium including computer program instructions, wherein the computer program instructions perform the image viewing method described in any one of the foregoing embodiments when being executed by the processor.

It needs to be understood that teaching of the present disclosure does not need to implement all the foregoing beneficial effects, but specific technical effects may be achieved through specific technical solutions, moreover, other embodiments of the present disclosure can further implement beneficial effects that are not mentioned above.

### BRIEF DESCRIPTION OF DRAWINGS

The foregoing and other objectives, features, and advantages of exemplary embodiments of the present disclosure become easier to be understood through following detailed descriptions with reference to the accompanying drawings. In the accompanying drawings, several embodiments are illustrated as examples without limitations.

In the accompanying drawings, a same or corresponding reference numeral indicates a same or corresponding part.
FIG. 1 is an interaction schematic flowchart illustrating implementation of an image viewing method according to an embodiment of the present disclosure;
FIG. 2 is a schematic flowchart illustrating implementation of an image viewing method at a terminal side according to an embodiment of the present disclosure;
FIG. 3 is a schematic flowchart I illustrating implementation of an image viewing method at a cleaning machine side according to an embodiment of the present disclosure;
FIG. 4 is a schematic flowchart II illustrating implementation of an image viewing method at a cleaning machine side according to an embodiment of the present disclosure;
FIG. 5 is a compositional structural schematic view of a terminal according to an embodiment of the present disclosure; and
FIG. 6 is a compositional structural schematic view of a cleaning machine according to an embodiment of the present disclosure.

### DESCRIPTION OF EMBODIMENTS

The principles and the spirits of the present disclosure are described in the following with reference to several exemplary embodiments. It should be understood that the embodiments are provided only for those ordinary skilled in the art to better understand and then implement the present disclosure, and are not to limit in any manner on the scope of the present disclosure. On the contrary, the embodiments are provided for the present disclosure to be relatively clear and thorough, and for the scope of the present disclosure to be fully conveyed to those ordinary skilled in the art.

Technical solutions of the present disclosure are further describes in detail in the following with reference to the accompanying drawings and specific embodiments.

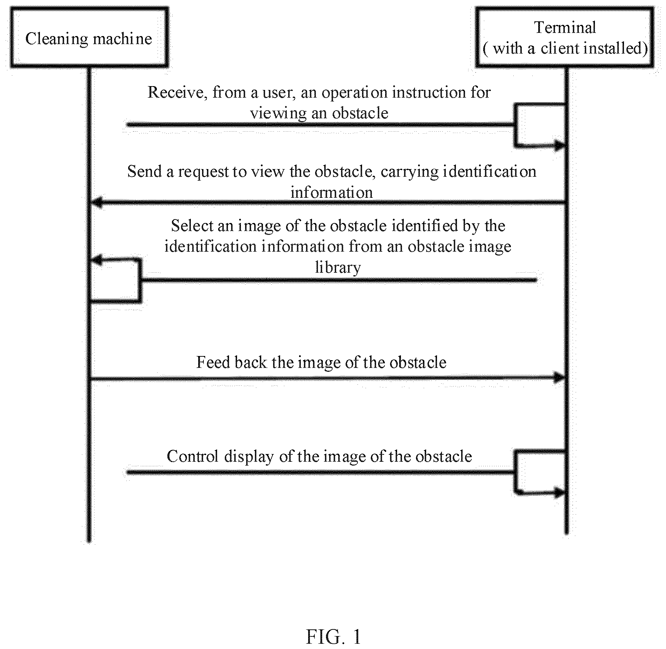

FIG. 1 is an interaction schematic flowchart illustrating implementation of an image viewing method according to an embodiment of the present disclosure.

Referring to FIG. 1, according to this embodiment of the present disclosure, a procedure of implementing the image viewing method includes information interaction between a terminal installed with a client and a cleaning machine. Specifically, an operation instruction for viewing an obstacle is first received from a user by a client installed on the terminal; a request to view the obstacle is then sent to the cleaning machine by the terminal in response to the operation instruction for viewing the obstacle, wherein the request carries identification information; after the cleaning machine receiving the request, an image of the obstacle identified by the identification information from an obstacle image database is selected by the cleaning machine; the image of the obstacle identified by the identification information is fed back to the terminal; and at last, a display of the image of the obstacle is controlled by the terminal through the client.

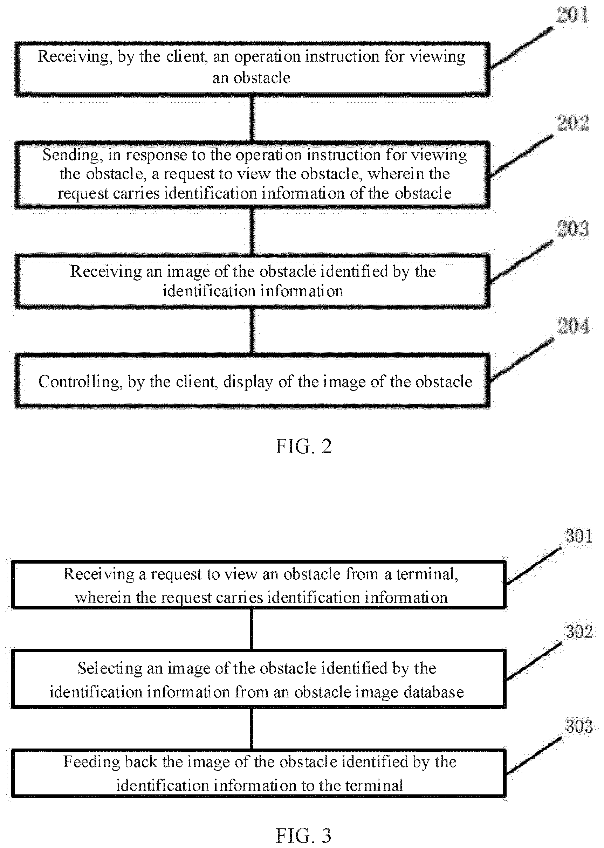

FIG. 2 is a schematic flowchart illustrating implementation of an image viewing method at a terminal side according to an embodiment of the present disclosure.

Referring to FIG. 2, according to this embodiment of the present disclosure, the image viewing method is applicable to the terminal, wherein the client matching the cleaning machine is installed on the terminal. The method includes: operation 201 of receiving, by the client, the operation instruction for viewing the obstacle; operation 202 of: sending, in response to the operation instruction for viewing the obstacle, a request to view the obstacle, wherein the request carries identification information of the obstacle; operation 203 of receiving the image of the obstacle identified by the identification information; and operation 204 of controlling, by the client, display of the image of the obstacle.

Specifically, the operation instruction for viewing the obstacle may be a click operation instruction, or may be a touch operation instruction. Correspondingly, operation 201 includes: receiving, by the client, a click operation instruction on an icon corresponding to the obstacle; or receiving, by the client, a touch operation instruction on an icon corresponding to the obstacle.

Specifically, when the user performs a click operation or a touch operation on an icon corresponding to a to-be-viewed obstacle on the client used to display a cleaning map of the cleaning machine, the terminal receives the operation instruction for viewing the obstacle by the client.

In operation 202, the terminal sends, in response to the operation instruction for viewing the obstacle, the request to view the obstacle to instruct the cleaning machine to select the image of the obstacle identified by identification information from the obstacle image database, wherein the request carries identification information. Specifically, the identification information is used to uniquely identify the identification information of the image of the obstacle or uniquely identify the obstacle.

In this way, when receiving the request to view the obstacle that carries the identification information, the cleaning machine may directly select the image of the obstacle identified by the identification information from the obstacle image database according to the identification information used to uniquely identify the image of the obstacle. Alternatively, when receiving the request to view the obstacle that carries the identification information, the cleaning machine may also directly select the image of the obstacle identified by the identification information from the obstacle image database according to the identification information used to uniquely identify the obstacle. Specifically, in the image of the obstacle, a position of the obstacle in the image is marked in a manner that is identifiable to the user, for example, a rectangular block is marked out around the obstacle.

In operations 203 and 204, after receiving the image of the obstacle that is identified by the identification information and is fed back by the cleaning machine, the terminal may directly display, by the client, the image of the obstacle in a specific display area in which the icon corresponding to the obstacle is located. As an example, the display area in which the icon corresponding to the obstacle is located may be a display area including a icon corresponding to the obstacle, or a display area at an upper left corner, a lower left corner, an upper right corner, or a lower right corner of the icon corresponding to the obstacle.

According to the embodiment of the present disclosure, in the image viewing method, the operation instruction for viewing the obstacle is first received from the user by the client installed on the terminal; the request to view the obstacle is then sent, in response to the operation instruction for viewing the obstacle, to the cleaning machine, to instruct the cleaning machine to select the image of the obstacle identified by the identification information from the obstacle image database; and the image of the obstacle that is identified by the identification information and is fed back from the cleaning machine is received, and the display of the image of the obstacle is controlled by the client. In this way, according to the present disclosure, through information interaction between the client installed on the terminal and the cleaning machine, based on an operation of a user for viewing an obstacle, the image of the obstacle can be displayed in real time by the client. Therefore, the user can visually see what the obstacle that the cleaning machine avoids is, thereby effectively improving user experience.

FIG. 3 is a schematic flowchart 1 illustrating implementation of an image viewing method at a cleaning machine side according to an embodiment of the present disclosure.

Referring to FIG. 3, according to an embodiment of the present disclosure, the image viewing method is applicable to the cleaning machine, and includes: operation 301 of receiving a request to view an obstacle from a terminal, wherein the request carries identification information; operation 302 of selecting an image of the obstacle identified by the identification information from an obstacle image database; and operation 303 of feeding back the image of the obstacle identified by the identification information to the terminal.

In operation 301, after receiving the request to view the obstacle, the cleaning machine may analyze the request to obtain the identification information. Specifically, the identification information is identification information used to uniquely identify the image of the obstacle or to uniquely identify the obstacle.

In operation 302, an image of the obstacle is stored in the obstacle image database in advance.

In an example, when storing an image of the obstacle, the cleaning machine may allocate, to one image correspondingly, a piece of identification information (for example, identification code) which is used to uniquely identify the image every time saving the image, and send the identification information and coordinates of the corresponding obstacle in the image to a client in real time. In this way, when performing image viewing, that is, when receiving the a request to view the obstacle that carries the identification information, the cleaning machine may select the image of the obstacle identified by the identification information quickly from the obstacle image database according to the identification information used to uniquely identify the image of the obstacle.

In another example, when storing an image of the obstacle, the cleaning machine directly correspondingly stores, in the obstacle image database, the image of the obstacle and the identification information that is used to uniquely identify the obstacle. In this way, when performing image viewing, the cleaning machine selects, according to the identification information that is used to uniquely identify the obstacle, the image of the obstacle identified by the identification information from the obstacle image database.

In operation 303, when feeding back the image of the obstacle identified by the identification information, the cleaning machine may feed back at least one of following related information of the obstacle at the same time: type of the obstacle, a confidence of the obstacle, and a quantity of times the cleaning machine avoids the obstacle.

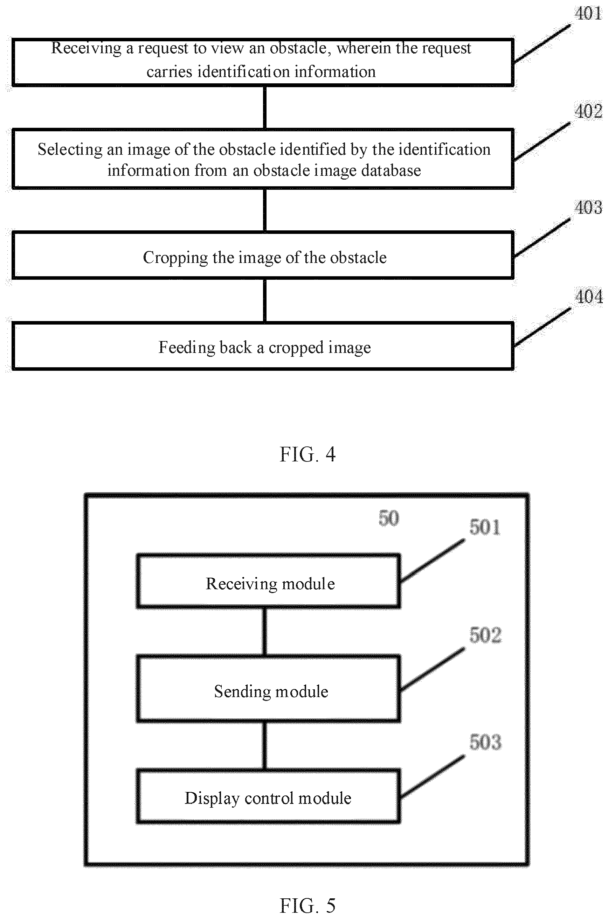

FIG. 4 is a schematic flowchart 2 illustrating implementation of an image viewing method at a cleaning machine side according to an embodiment of the present disclosure.

Referring to FIG. 4, according to this embodiment of the present disclosure, the image viewing method is applicable to a cleaning machine, and includes: operation 401 of receiving, from a terminal, a request to view an obstacle, wherein the request carries identification information; operation 402 of selecting an image of the obstacle identified by the identification information from an obstacle image database; operation 403 of cropping the image of the obstacle; and operation 404 of feeding back a cropped image.

In operation 401, after receiving the request to view the obstacle, the cleaning machine may analyze the request to obtain the identification information. Specifically, the identification information is identification information that is used to uniquely identify the image of the obstacle or identification information used to uniquely identify the obstacle.

In operation 402, the cleaning machine may store the image of the obstacle in the obstacle image database in advance.

In an example, when storing an image of the obstacle, the cleaning machine may allocate, to one image correspondingly, a piece of identification information (for example, identification code) which is used to uniquely identify the image every time saving the image, and send the identification information and coordinates of the obstacle in the image to a client in real time. In this way, when performing image viewing, that is, when receiving a request to view the obstacle that carries the identification information, the cleaning machine may quickly select, according to the identification information that is used to uniquely identify the image of the obstacle, the image of the obstacle identified by the identification information from the obstacle image database.

In another example, when storing an image of the obstacle, the cleaning machine directly correspondingly stores the image of the obstacle and the identification information that is used to uniquely identify the obstacle in the obstacle image database. In this way, when performing image viewing, the cleaning machine selects, according to the identification information that is used to uniquely identify the obstacle, an image of the obstacle identified by the identification information from the obstacle image database.

In operations 403 and 404, the image of the obstacle fed back by the cleaning machine may be cropped, and a principle for cropping is that at least the obstacle is included. In this way, the image fed back by the cleaning machine to a terminal client is cropped image. Compared with an entire image (that is, an original image) of the obstacle, the cropped image has a relatively small size, so that a good real-time feedback can be achieved, thereby effectively improving user experience.

In an embodiment of the present disclosure, an interface for a user to select and view the original image of the obstacle stored by the cleaning machine is provided in advance on the client of the terminal. In this way, after operation 404, the method further includes: further receiving, by the cleaning machine, a request to view an original image of the cropped image; and feeding back, in response the request to view the original image, the image of the obstacle identified by the identification information.

In this way, according to the present disclosure, through information interaction between the client installed on the terminal and the cleaning machine, based on the operation of the user for viewing the obstacle, the image of the obstacle can be displayed in real time by the client. Therefore, the user can visually see what the obstacle that the cleaning machine avoids is, thereby effectively improving user experience.

Similarly, similar to the image viewing method described above, an embodiment of the present disclosure also provides a terminal, wherein a client matching a cleaning machine is installed on the terminal. As illustrated in FIG. 5, the terminal 50 includes a receiving module 501, a sending module 502, and a display control module 503. Specifically, the receiving module 501 is configured to receive, by the client, an operation instruction for viewing an obstacle; the sending module 502 is configured to send, in response to the operation instruction for viewing the obstacle, a request to view the obstacle, wherein the request carries identification information, and the identification information is identification information used to uniquely identify the image of the obstacle or identification information used to uniquely identify the obstacle; the receiving module 501 is further configured to receive the image of the obstacle identified by the identification information; and the display control module 503 is configured to control, by the client, a display of the image of the obstacle.

According to an embodiment of the present disclosure, the receiving module 501 is specifically configured to: receive, by the client, a click operation instruction on an icon corresponding to the obstacle; or receive, by the client, a touch operation instruction on an icon corresponding to the obstacle.

According to an embodiment of the present disclosure, the display control module 503 is specifically configured to display, by the client, the image of the obstacle in a specific display area in which the icon corresponding to the obstacle is located.

It should to be noted here that foregoing descriptions in the embodiment of the terminal are similar to foregoing descriptions in the method embodiments as illustrated in FIG. 1 and FIG. 2, and have similar beneficial effects to those of the foregoing method embodiments as illustrated in FIG. 1 and FIG. 2. Therefore, details are not provided again. For technical details not disclosed in the embodiment of the terminal of the present disclosure, the foregoing descriptions in the method embodiments as illustrated in FIG. 1 and FIG. 2 of the present disclosure are referred to for understanding, and for brevity, details are not provided again.

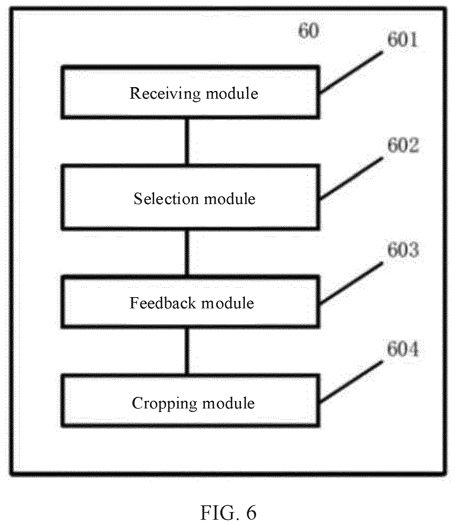

Further, based on the image viewing method described above, an embodiment of the present disclosure further provides a cleaning machine. As illustrated in FIG. 6, the cleaning machine 60 includes: a receiving module 601, configured to receive a request to view an obstacle, wherein the request carries identification information, and the identification information is identification information used to uniquely identify an image of the obstacle or identification information uniquely identify the obstacle; a selection module 602, configured to select the image of the obstacle identified by the identification information from an obstacle image database; and a feedback module 603, configured to feed back the image of the obstacle identified by the identification information.

According to an embodiment of the present disclosure, the feedback module 603 is further configured to: while feeding back the image of the obstacle identified by the identification information, feed back at least one of following information related to the obstacle at the same time: type of the obstacle, a confidence of the obstacle, and a quantity of times the cleaning machine avoids the obstacle.

According to an embodiment of the present disclosure, as illustrated in FIG. 6, the cleaning machine 60 further includes a cropping module 604, configured to: after selecting the image of the obstacle identified by the identification information by the selection module from the obstacle image database, crop the image of the obstacle; and correspondingly, the feedback module 603, specifically configured to feed back a cropped image of the obstacle.

According to an embodiment of the present disclosure, the receiving module 601 is further configured to receive a request to view an original image of the cropped image; and the feedback module 603 is further configured to feed back, in response to the request to view the original image, the image of the obstacle identified by the identification information.

It should to be noted here that foregoing descriptions in the embodiment of the cleaning machine are similar to foregoing descriptions in the method embodiments as illustrated in FIG. 3 and FIG. 4, and have similar beneficial effects to those of the foregoing method embodiments as illustrated in FIG. 3 and FIG. 4. Therefore, details are not provided again. For technical details not disclosed in the embodiment of the cleaning machine of the present disclosure, the foregoing descriptions in the method embodiments as illustrated in FIG. 3 and FIG. 4 of the present disclosure are referred to for understanding, and for brevity, details are not provided again.

It should be noted that, in this specification, terms "include", "comprise", or any other variants thereof are intended to cover a non-exclusive inclusion, so that a process, a method, an article, or an apparatus that includes a list of elements not only includes those elements but also includes other elements that are not expressly listed, or further includes elements inherent to such the process, method, article, or apparatus. In a case in which there are no other limitations, an element limited by words "include/comprise a..." does not exclude that there are additional same elements in the process, method, article, or apparatus that includes the element.

In the embodiments provided in the present application, it should be understood that the disclosed device and method may be implemented in another manner. The device embodiment described above is merely exemplary, for example, division of the units is merely logic function division, and there may be additional division manners in actual implementation, for example, a plurality of units or components may be combined or may be integrated into another system, or some features may be ignored or not performed. In addition, mutual coupling, direct coupling, or communication connections between various displayed or discussed components may be through some interfaces, and indirect coupling or communication connections between devices or units may be electrical, mechanical, or in other forms.

The foregoing units described as separate components may be or may not be physically separate, the components displayed as units may be or may not be physical units; and may be located at one place or may be distributed on a plurality of network units; and some or all of the units may be selected according to actual requirements to achieve objectives of solutions of the embodiments.

In addition, respective functional units in respective embodiments of the present disclosure may be integrated into one processing unit, or a respective unit may act as one unit independently, respectively, or two or more than two units are integrated into one unit; and the foregoing integrated unit may be implemented in a form of hardware, or may be implemented in a form of hardware in combination with a software functional unit.

It could be understood by those ordinary skilled in the art that all or some steps implementing the foregoing method embodiment may be implemented by hardware related to program instructions. The foregoing program may be stored in a computer-readable storage medium, and when the program is executed, steps including the foregoing method embodiments are performed; and the foregoing storage medium includes various media that can store a program code such as a removable storage device, a read only memory (ROM), a magnetic disk, an optical disc, or the like.

Alternatively, when being implemented in a form of a software functional module and sold or used as an independent product, the foregoing integrated units in the present disclosure may be stored in a computer-readable storage medium. Based on such an understanding, essence or the part contributing to the prior art of the technical solutions in the embodiments of the present disclosure may be embodied in a form of a software product, and the computer software product is stored in a storage medium and includes several instructions configured to cause a computer device (which may be a personal computer, a server, a network device, or the like) to perform all or a part of the method described in the embodiments of the present disclosure. The foregoing storage medium includes various media that can store a program code such as a removable storage device, a ROM, a magnetic disk, an optical disc, or the like.

The foregoing descriptions are merely specific embodiments of the present disclosure, but the protection scope of the present disclosure is not limited thereto. Variations or replacements that may be easily contemplated by those ordinary skilled in the art within the scope of technology disclosed in the present disclosure shall fall within the protection scope of the present disclosure. Therefore, the protection scope of present disclosure shall be subject to the protection scope of the claims.

Another objective of the embodiments of the present disclosure is to provide a remote support method and device for remotely supporting a computer apparatus, which are easy to be applied without damaging safety.

## Claims

1. An image viewing method, applied to a terminal, wherein a client matching with a cleaning machine is installed on the terminal, and the image viewing method comprises:
receiving, by the client, an operation instruction for viewing an obstacle;
sending, in response to the operation instruction, a request to view the obstacle, wherein the viewing request carries identification information, and the identification information is identification information used to uniquely identify an image of the obstacle or identification information used to uniquely identify the obstacle;
receiving the image of the obstacle identified by the identification information; and
controlling, by the client, display of the image of the obstacle.

2. The image viewing method according to claim 1, wherein the receiving, by the client, the operation instruction for viewing the obstacle comprises:
receiving, by the client, a click operation instruction on an icon corresponding to the obstacle; or
receiving, by the client, a touch operation instruction on an icon corresponding to the obstacle.

3. The image viewing method according to claim 1, wherein the controlling, by the client, the display of the image of the obstacle comprises:
displaying, by the client, the image of the obstacle in a display area in which the icon corresponding to the obstacle is located.

4. An image viewing method, applied to a cleaning machine, wherein the image viewing method comprises:
receiving a request to view an obstacle, wherein the request carries identification information, and the identification information is identification information used to uniquely identify an image of the obstacle or identification information used to uniquely identify the obstacle;
selecting the image of the obstacle identified by the identification information from an obstacle image database; and
feeding back the image of the obstacle.

5. The image viewing method according to claim 4, further comprising:
while feeding back the image of the obstacle, feeding back at least one of following information related to the obstacle: a type of the obstacle, a confidence of the obstacle, and a quantity of times that the cleaning machine avoids the obstacle.

6. The image viewing method according to claim 4 or 5, further comprising: after selecting the image of the obstacle identified by the identification information from the obstacle image database, cropping the image of the obstacle; and
accordingly, feeding back the image of the obstacle comprises: feeding back a cropped image.

7. The image viewing method according to claim 6, further comprising:
receiving a request to view an original image of the cropped image; and
feeding back, in response to the request to view the original image, the image of the obstacle identified by the identification information.

8. The image viewing method according to claim 6, further comprising: before selecting the image of the obstacle identified by the identification information from the obstacle image database,
storing one or more images into the obstacle image database in advance, wherein each of the one or more images represents a respective obstacle; and
allocating, to each of the one or more images, a piece of identification information used to uniquely identify the image.

9. The image viewing method according to claim 6, further comprising: before selecting the image of the obstacle identified by the identification information from the obstacle image database,
storing one or more images and one or more identifiers into the obstacle image database in advance, wherein each of the one or more images represents a respective obstacle, and each identifier is associated with a respective image and used to uniquely identify the obstacle represented by the image.

10. A terminal, wherein a client matching with a cleaning machine is installed on the terminal, and the terminal comprises: a receiving module, a sending module, and a display control module, wherein
the receiving module is configured to receive, by the client, an operation instruction for viewing an obstacle;
the sending module is configured to send, in response to the operation instruction, a request to view the obstacle, wherein the request carries identification information, and the identification information is identification information used to uniquely identify an image of the obstacle or identification information used to uniquely identify the obstacle;
the receiving module is further configured to receive the image of the obstacle identified by the identification information; and
the display control module is configured to control, by the client, display of the image of the obstacle.

11. A cleaning machine, comprising:
a receiving module, configured to receive a request to view an obstacle, wherein the request carries identification information, and the identification information is identification information used to uniquely identify an image of the obstacle or identification information used to uniquely identify the obstacle;
a selection module, configured to select the image of the obstacle identified by the identification information from an obstacle image database; and
a feedback module, configured to feed back the image of the obstacle.

12. The cleaning machine according to claim 11, further comprising:
a cropping module, configured to: after selecting the image of the obstacle identified by the identification information from the obstacle image database by the selection module, crop the image of the obstacle, and
accordingly, the feedback module is further configured to feed back a cropped image.

13. The cleaning machine according to claim 11, wherein the obstacle image database comprises one or more images, wherein each of the one or more images represents a respective obstacle, and a piece of identification information used to uniquely identify the image to allocated to each of the one or more images.

14. The cleaning machine according to claim 11, wherein the obstacle image database comprises:
one or more images, wherein each of the one or more images represents a respective obstacle; and
one or more identifiers, wherein each identifier is associated with a respective image, and used to uniquely identify the obstacle represented by the respective image.

15. An image viewing apparatus, comprising a processor and a memory, wherein the memory stores computer program instructions, and when the computer program instructions are executed by the processor, operations of the image viewing method according to any one of claims 1 to 3 are performed.

16. An image viewing apparatus, comprising a processor and a memory, wherein the memory stores computer program instructions, and when the computer program instructions are executed by the processor, operations of the image viewing method according to any one of claims 4 to 9 are performed.

17. A non-transitory computer-readable storage medium, comprising computer program instructions, wherein when the computer program instructions are executed by a processor, operations of the image viewing method according to any one of claims 1 to 3 are performed.

18. A non-transitory computer-readable storage medium, comprising computer program instructions, wherein when the computer program instructions are executed by a processor, operations of the image viewing method according to any one of claims 4 to 9 are performed.
